# EUROPÄISCHE PATENTSCHRIFT

(11) **EP 3 822 077 B1**
(45) Veröffentlichungstag und Bekanntmachung des Hinweises auf die Patenterteilung: **26.01.2022**
(21) Anmeldenummer: 19208674.2
(22) Anmeldetag: 12.11.2019
(51) Int. Cl.: B32B 21/06, B32B 21/14, B27D 1/00, B32B 37/10, B32B 37/16, E04C 2/10, E04C 2/24, E04F 15/10, B32B 37/18, B32B 38/06

(54) **VERFAHREN ZUM HERSTELLEN EINER FURNIERTEN PLATTE**
METHOD FOR PRODUCING A VENEERED PLATE
PROCÉDÉ DE FABRICATION D'UNE PLAQUE CONTREPLAQUÉE

(43) Veröffentlichungstag der Anmeldung: 19.05.2021
(73) Patentinhaber: Flooring Technologies Ltd., Kalkara SCM1001 (MT)
(72) Erfinder: Kalwa, Dr. Norbert, 32805 Horn-Bad Meinberg (DE); Siems, Jens, 17139 Malchin (DE)
(74) Vertreter: Kalkoff & Partner Patentanwälte mbB

(56) Entgegenhaltungen:
- EP-A1- 2 065 183
- EP-A1- 2 902 196
- WO-A1-2020/211989
- DE-A1- 2 553 906
- DE-A1-102013 113 130

## Beschreibung

Die Erfindung betrifft ein Verfahren zum Herstellen einer furnierten Platte sowie die furnierte Platte.

Furnierte Platten vermitteln den Eindruck einer Echtholz-Oberfläche, sind aber durch den sparsamen Einsatz der dünnen Furnierlagen in Verbindung mit einer Trägerplatte sehr wirtschaftlich. Eine typische furnierte Platte, bei der das Furnier mittels eines kunstharzgetränkten Papiers auf der Trägerplatte fixiert wird, wird in der EP 2 902 196 A1 aber auch der DE 103 00 247 B4 vorgestellt.

Überdies ist aus der DE 10 2013 113 130 A1 ein Verfahren zur Herstellung einer Fußbodendiele mit einer Trägerplatte und einem oberseitigen Furnier bekannt. Dabei werden einzelne Furniere voneinander beabstandet auf eine großflächige Ausgangsträgerplatte aufgelegt, welche bereits eine Harzschicht aufweist. Auf der von den Furnieren abgewandten Seite der Ausgangsträgerplatte ist zudem eine Gegenzuglage angeordnet. Der sich damit ergebende Mehrschichtkörper wird heiß verpresst, so dass Furniere und Ausgangsträgerplatte durch die Harzschicht miteinander verklebt werden. Anschließend wird der Mehrschichtkörper in einzelne Fußbodendielen aufgetrennt.

Nachteilig an den bekannten furnierten Platten ist, dass die Eigenschaften des Furniers nur sehr eingeschränkt verbessert werden können.

Es ist daher Aufgabe der Erfindung, ein Verfahren zum Herstellen einer furnierten Platte bereitzustellen, das es ermöglicht, die Eigenschaften des Furniers einfacher zu verbessern.

Diese Aufgabe wird gelöst mit einem Verfahren nach Anspruch 1 und mit einer furnierten Platte nach Anspruch 7.

Die Erfindung betrifft ein Verfahren zum Herstellen einer furnierten Platte, aufweisend ein Furnier und eine Trägerplatte, mit den Schritten:
- Bereitstellen eines Furniers und einer Trägerplatte
- Bereitstellen eines kunstharzgetränkten Papiers, das in einem Pressgutstapel zwischen einer Oberseite der Trägerplatte und einer Unterseite des Furniers angeordnet wird, sowie
- Verpressen des Pressgutstapels,
dadurch gekennzeichnet, dass
- das Papier mit einem Tränkharz getränkt wird,
- das mit Tränkharz getränkte Papier vorgetrocknet wird, so dass es noch klebrig ist,
- mindestens ein Additiv auf das vorgetrocknete, noch klebrige Kunstharz aufgetragen wird, und
- das mit Kunstharz getränkte und mit einem Additiv versehene Papier auf eine Restfeuchte von bis zu 8 % Feuchtegehalt getrocknet wird.

Als Trägerplatte kann jede auf mindestens einer Seite ebene Platte eingesetzt werden, die mit Kunstharz eine feste Verbindung eingeht. Vorzugsweise werden Holzwerkstoffplatten eingesetzt, z. B. mitteldichte oder hochdichte Faserplatten (MDF, HDF), Spanplatten, OSB-Platten, Massivholzplatten, Sperrholz sowie Stab- oder Stäbchenplatten, aber auch zementgebundene Spanplatten oder Faserplatten, einschließlich Faserplatten mit hohem Bindemittelanteil, sowie BioCompositplatten und wasserfeste Platten sind geeignet. Wasserfeste Platten sind Platten, auch Holzwerkstoffplatten, die sich unter Einwirkung von Wasser kaum oder gar nicht verformen, die insbesondere nicht oder kaum quellen. Die Trägerplatte weist eine Oberseite auf, auf der das Furnier aufgebracht wird und eine Unterseite, auf der optional ein Gegenzug aufgebracht wird.

Als Furnier werden Lagen aus Echtholz eingesetzt, die eine Dicke von bis zu 10 mm, vorzugsweise jedoch von 0,2 mm bis 5 mm, insbesondere von 0,5 mm bis 2 mm aufweisen. Das Furnier kann einstückig von einem Stamm durch Messern oder Schälen hergestellt sein. Es kann aber auch aus einzelnen Stücken zusammengesetzt sein, die z. B. durch Bindemittel oder sogenannte Leimfäden miteinander verbunden sind. Das Furnier weist bevorzugt die Abmessungen der Trägerplatte auf. Das Furnier weist eine der Trägerplatte zugewandte Unterseite und eine der Trägerplatte abgewandte Oberseite auf.

Das Papier besteht bevorzugt aus Zellstoff und weist ein Blattgewicht von 18 g/m² bis 50 g/m² auf. Es kann ggf. Pigmente bzw. Farbstoffe und Bindemittel enthalten.

Das Bindemittel ist vorzugsweise ein duroplastisches Harz, insbesondere ein aminoplastisches oder phenolbasiertes Harz. Nachfolgend wird das Bindemittel auch als Kunstharz bezeichnet. Typisch werden Melaminharz, Phenolharz, Harnstoffharz oder Mischungen dieser Harze eingesetzt. Kunstharz wird bei der Imprägnierung als wässrige Lösung mit einem Feststoffgehalt von ca. 50 Gew.-% bis 60 Gew.-% eingesetzt, wobei der Feststoffgehalt mit dem Gehalt an Kunstharz gleichzusetzen ist. Das Kunstharz wird in einer Menge von 250 % bis 600 % Feststoffgehalt bezogen auf das Flächengewicht des Papiers aufgebracht. Das Kunstharz wird in einer Menge eingesetzt, die gewährleistet, dass das Kunstharz das Furnier mindestens abschnittsweise durchdringt und dadurch das Additiv in das Furnier, ggf. bis an die Oberseite des Furniers transportiert. Dabei wird das Papier als Rollenware von einer Abwickelstation abgerollt, durch ein Tränkbad flüssigen Kunstharzes hindurch gezogen und imprägniert. Danach folgt eine Trocknung in einem Schwebetrockner und eine Aufwicklung oder eine Formatierung des kunstharzgetränkten Papiers. Es ist aber auch möglich, dass ein Teil des Kunstharzes als Feststoff, z. B. als Pulver oder Staub eingesetzt wird, z. B. mit Tribopistolen aufgesprüht wird. Es kann z. B. ein erster Teil des Kunstharzes in flüssiger Form und ein zweiter Teil des Kunstharzes in fester Form aufgetragen werden.

Trägerplatte, kunstharzgetränktes Papier und Furnier werden zu einem Pressgutstapel geschichtet, wobei eine Unterseite des kunstharzgetränkten Papiers auf einer Oberseite der Trägerplatte aufliegt und eine Unterseite des Furniers auf einer Oberseite des kunstharzgetränkten Papiers aufliegt.

Optional kann ein Gegenzug auf der Unterseite der Trägerplatte angeordnet sein. Der Gegenzug soll die Zugkräfte kompensieren, die durch das Schrumpfen des Kunstharzes im kunstharzgetränkten Papier bei der Aushärtung des Kunstharzes in der Presse auf der Oberseite der Trägerplatte ausgelöst werden. Der Gegenzug ist meist ebenfalls ein kunstharzgetränktes Papier oder eine kunstharzgetränkte Pappe, es könnte aber auch ein Furnier oder eine andere flächige Schicht sein, die flächig mit der Unterseite der Trägerplatte verbunden ist. Bevorzugt wird ein Gegenzug eingesetzt, der der Beschichtung auf der Oberseite der Trägerplatte vergleichbar oder ähnlich ist. Vorteilhaft wird im Zusammenhang mit der Erfindung also ein kunstharzgetränktes Papier eingesetzt, das auf der der Trägerplatte abgewandten Seite mit einem Furnier beschichtet ist.

Das kunstharzgetränkte Papier oder Imprägnat, das für den Gegenzug eingesetzt wird, um ein außenliegendes Furnier mit der Trägerplatte zu verbinden, kann selbstverständlich in der gleichen Weise hergestellt werden und mit einem Additiv oder Additiven versehen werden wie das kunstharzgetränkte Papier, das auf der Oberseite der Trägerplatte eingesetzt wird. Das Additiv oder die Additive können gleich oder anders sein als in dem kunstharzgetränkten Papier für die Oberseite der Trägerplatte. Der Einsatz von anderen Gegenzügen statt des Furniers ist aber auch möglich. Es können zum Beispiel dekorative Imprägnate eingesetzt werden. Diese sind ebenfalls mit den oben beschriebenen Kunstharzen imprägniert und eröffnen die Möglichkeit, die Rückseite des Produktes farblich anders zu gestalten. Dies können im einzelnen unifarbige oder bedruckte Imprägnate auf Basis von Dekorpapieren sein.

Der Pressgutstapel wird zu einer furnierten Platte verpresst. In der Presse wird das Kunstharz unter Einwirkung von erhöhter Temperatur und erhöhtem Druck verflüssigt, es härtet chemisch aus und erstarrt beim Abkühlen. Die Presszeit beträgt typisch zwischen 20 Sekunden und 60 Sekunden. Die Presstemperatur liegt meist zwischen 100 °C und 240 °C, bevorzugt zwischen 160 °C und 200 °C. Der Pressdruck beträgt zwischen 25 N/mm² und 50 N/mm². Während des Pressvorgangs dringt das verflüssigte Kunstharz in das Furnier. Das Furnier weist, anders als die dichte Oberfläche der Trägerplatte, Hohlräume auf, zum einen herstellungsbedingte Risse und Spalten, aber auch holztypische Hohlräume, z. B. durch angeschnittene Gefäße. Das in das Furnier eindringende Kunstharz bewirkt die feste Anbindung des Furniers an das kunstharzgetränkte Papier bzw. die Trägerplatte.

Erfindungsgemäß wird das kunstharzgetränkte Papier nach dem Tränken vorgetrocknet, sodass es noch klebrig ist. Dies ist üblicherweise bei einem Gehalt an flüchtigen Substanzen bzw. verdampfbaren Substanzen, der auch als Restfeuchte (VC-Wert) bezeichnet wird von VC = 10% bis VC = 15% der Fall. Der VC-Wert wird bestimmt als Differenz zwischen Ausgangsgewicht und Endgewicht nach Trocknen bei 105 °C bis zur Gewichtskonstanz.

Das Kunstharz bildet die Oberfläche des kunstharzgetränkten Papiers. Daher ist die Oberfläche des kunstharzgetränkten Papiers, wie vorstehend beschrieben, nach der Vortrocknung klebrig. Auf diese klebrige Oberfläche des kunstharzgetränkten Papiers wird nun ein Additiv aufgetragen. Das Additiv kann in flüssiger Form oder als Feststoff, insbesondere als partikelförmiger Feststoff aufgetragen werden. Das Auftragen kann durch Sprühen, Spritzen, Gießen, Rakeln, Walzen, Streuen oder dergleichen erfolgen. Es können auch mehrere Additive in Mischung aufgetragen werden. Alternativ oder in Kombination können auch mehrere Additive nacheinander aufgetragen werden. Alternativ können die Additive auch in das noch nicht vorgetrocknete Kunstharz appliziert werden.

Nach dem Auftragen des Additivs bzw. der Additive wird das kunstharzgetränkte Papier weiter getrocknet. Das kunstharzgetränkte und mit einem Additiv versehene Papier ist üblicherweise bei einer Restfeuchte (VC-Wert) von bis zu 8 % Feuchtegehalt, bevorzugt von bis zu 6 % Feuchtegehalt, insbesondere von bis zu 5 % Feuchtegehalt gebrauchsfertig, d. h. bereit für den Einsatz in einem Pressgutstapel.

Das so gebrauchsfertig getrocknete, kunstharzgetränkte Papier, das mit einem Additiv versehen ist, unterscheidet sich von bekannten kunstharzgetränkten Papieren dadurch, dass das Additiv nicht im Kunstharz verteilt ist, sondern vielmehr konzentriert dort angeordnet ist, wo es benötigt wird. Das Additiv, das vorzugsweise die Gebrauchseigenschaften des Furniers verbessern soll, wird nach der Erkenntnis des Erfinders während des Pressvorgangs auf der Oberfläche des Kunstharzes mindestens abschnittsweise durch das Furnier getragen oder gedrückt, so dass sich das Additiv gezielt im Furnier verteilt. Damit wird zum einen ein besonders sparsamer Einsatz des Additivs ermöglicht. Zum anderen gelangt eine höhere Konzentration des Additivs gezielt in das Furnier bzw. an die Furnieroberfläche, so dass der Effekt des jeweiligen Additivs besser gewährleistet ist. Das erfindungsgemäße Verfahren weist den Vorteil auf, dass gewünschte Gebrauchseigenschaften gezielt eingestellt werden können, insbesondere durch Kombination von Additiven. Als vorteilhaft erweist sich weiter, dass das Verfahren mit bestehenden Vorrichtungen ohne weiteren apparativen Aufwand umgesetzt werden kann.

Als Additiv können, jeweils einzeln oder in Mischung oder nacheinander, verschiedene Substanzen oder Verbindungen auf das Kunstharz aufgetragen werden. Als Additiv sind beispielsweise geeignet: Farbstoff, Pigment, Effektpigment, z. B. Metall-Pigmente oder reflektierende Pigmente, Flammschutzmittel wie z. B. Ammoniumphosphate oder Wasserglas, Tinte, ein UV-Stabilisator, ein Infrarotabsorber, Mittel zur Erhöhung der Leitfähigkeit, antibakterielle Mittel, Hydrophobierungsmittel, Bleichmittel oder Beize. Je nach benötigter oder gewünschter Eigenschaft kommen natürlich auch beliebige andere Additive in Frage. Das Additiv kann als Feststoff, vorzugsweise als partikelförmiger Feststoff, z. B. als Staub oder Pulver, aber auch als Granulat vorliegen. Alternativ kann ein flüssiges oder pastöses Additiv eingesetzt werden.

Nach einer Weiterbildung der Erfindung ist das Additiv nicht in dem Kunstharz lösbar bzw. nicht homogen im Kunstharz lösbar. Auf diese Weise ist gewährleistet, dass das Additiv sich nicht mit dem Kunstharz vermischt, sondern auf der Oberfläche des Kunstharzes verbleibt und dadurch möglichst vollständig in Kontakt mit dem Furnier kommt.

Das erfindungsgemäße Verfahren wird weiter optimiert, wenn nach dem Auftragen des Kunstharzes das überschüssige Kunstharz auf der Unterseite des kunstharzgetränkten Papiers entfernt wird. Es kann z. B. durch Abstreifer oder Rakel möglichst scharf abgezogen werden. Auf diese Weise wird das Kunstharz nur dort eingesetzt, wo es benötigt wird: auf der Oberseite des kunstharzgetränkten Papiers, von wo aus das Kunstharz, auf dessen Oberfläche nach einer Vortrocknung ein Additiv aufgetragen wurde, während des Pressvorgangs durch das Furnier hindurch gedrückt wird. Eine weitere Optimierung kann dadurch erreicht werden, dass man beim Tränken des Overlays vor dem Trocknungsschritt noch pulverförmiges Melaminharz auf die Oberseite des Papiers aufstreut. Dies führt nach dem Trocknungsschritt, dem Auftrag des Additivs und während der abschließenden Verpressung zu einem besseren Verfließen bzw. zu einem besseren Fluss des Melaminharzes und damit auch zu einem besseren Transport des Additivs durch das Furnier. Mit dieser Variante kann das Ausmaß des Flusses des Kunstharzes noch präziser beeinflusst bzw. gesteuert werden. Dies ist insbesondere bei der Verwendung von dickeren Furnieren oder wenn auf der Oberfläche des Furniers ein geschlossener Kunstharzfilm erzeugt werden soll, von Interesse. Mit Hilfe dieses Verfahrens kann - falls gewünscht - auch eine Variation des Papiergewichts des Overlays und dessen Harz einhergehen. Die Mengen an Kunstharzpulver, die auf das Overlay aufgestreut werden können, betragen bis zu 100 g/m². Für den Auftrag pulverförmigen Kunstharzes können bekannte Streuvorrichtungen eingesetzt werden.

Die Erfindung betrifft weiter eine furnierte Platte, aufweisend eine Trägerplatte und ein oberhalb der Trägerplatte angeordnetes Furnier, wobei zwischen einer Oberseite der Trägerplatte und einer Unterseite des Furniers ein kunstharzgetränktes Papier angeordnet ist, dadurch gekennzeichnet, dass das Furnier kunstharzgetränkt ist, und dass sich auf der Oberseite des Kunstharzes im Furnier Additive befinden. Die Additive, die die Gebrauchseigenschaften des Furniers verbessern, befinden sich überwiegend im Furnier. Das Kunstharz ist im Wesentlichen frei von Additiv.

Die furnierte Platte weist nach einer Ausführungsform einen Gegenzug auf der Unterseite der Trägerplatte auf. Der Gegenzug kann ein kunstharzgetränktes Papier oder ein kunstharzgetränkter Karton bzw. eine Pappe sein, ist aber bevorzugt auch als Furnier ausgeführt, besonders vorteilhaft als Furnier, das auf die gleiche Weise mit einem kunstharzgetränkten Papier, auf das Additive aufgetragen sind, an der Trägerplatte befestigt wird. Der Gegenzug wird als Bestandteil des Pressgutstapels mit der Trägerplatte verpresst und bewirkt, dass sich die furnierte Platte nicht verzieht, weil nun auf beiden Seiten der Trägerplatte annähernd gleiche Kräfte wirken.

Als Trägerplatte kann jede Platte eingesetzt werden, die eine ebene Oberfläche aufweist. Bevorzugt ist die Trägerplatte eine Holzwerkstoffplatte oder eine BioComposit-Platte, so wie vorstehend beschrieben.

Details der Erfindung werden an Hand von Ausführungsbeispielen nachfolgend näher erläutert. Es zeigt:

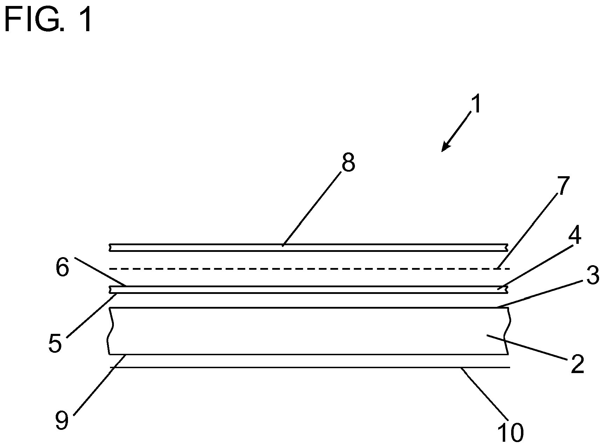

- Fig. 1: eine schematische Darstellung der Schichten einer erfindungsgemäßen Trägerplatte.

Die erfindungsgemäße furnierte Platte 1 weist - wie in Fig. 1 dargestellt - eine Trägerplatte 2 und ein auf der Oberseite 3 der Trägerplatte 2 angeordnetes, kunstharzgetränktes Papier 4 auf. Das kunstharzgetränkte Papier 4 weist eine Unterseite 5 und eine Oberseite 6 auf. Die Unterseite 6 liegt auf der Oberseite 3 der Trägerplatte 2 auf. Die Oberseite 6 weist Kunstharz auf. Auf der Oberseite 6 ist ein Additiv 7 aufgebracht. Auf dem mit dem Additiv 7 versehenen, kunstharzgetränkten Papier ist ein Furnier 8 angeordnet. Die Trägerplatte 2 weist eine Unterseite 9 auf, auf der ein Gegenzug 10 aus kunstharzgetränktem Papier angeordnet ist.

Trägerplatte 2, kunstharzgetränktes Papier 3 und Additiv 7 sowie Furnier 8 bilden einen Pressgutstapel, der dann zu einer furnierten Platte 1 verpresst wird. Optional wird der Pressgutstapel um den Gegenzug 10 ergänzt, der dann die Unterseite der furnierten Platte 1 bildet.

### Ausführungsbeispiel 1 - Colorierung der Oberfläche

**Ausgangsmaterialien:**

| | | |
|---|---|---|
| Furnier für die Oberseite: | Stärke: | 0,8 mm |
| | Art: | Eiche |
| Kunstharzgetränktes Overlay: | Papiergewicht: | 25g/m² |
| | Harzauftrag: | 600% |
| | Kunstharz: | Melaminharz |
| Additiv: | 2,7 g Digitaldruckfarbe flüssig/m² | |
| | schwarz, wässrig, im Sprühauftrag aufgetragen | |
| Trägerplatte: | hochdichte Faserplatte: | HDF |
| | Stärke: | 12 mm |
| Gegenzug: | kunstharzgetränktes Papier mit Furnier als Außenlage | |
| | Papiergewicht: | 25g/m² |
| | Harzauftrag: | 600% |
| | (Oberseite zum Gegenzugfurnier gedreht) | |
| | Furnierart: | Birke |
| | Stärke: | 0,8 mm |

### Herstellung des kunstharzgetränkten Papiers

Das Papier (Overlay) wird durch ein Tränkbad mit flüssigem Kunstharz, hier Melaminharz, geführt. Nach dem Tränken wird überschüssiges Kunstharz durch einen Abstreifer entfernt, so dass allein auf der Oberseite des nun kunstharzgetränkten Papiers eine Schicht von Kunstharz aufsteht. Die Oberseite des kunstharzgetränkten Papiers besteht aus Kunstharz, hier Melaminharz.

Das so getränkte Papier wird zwischengetrocknet bis auf einen VC-Wert von maximal 15%, bevorzugt von 12%, vorzugsweise von 10%. In diesem Zustand ist das Kunstharz klebrig. Auf die klebrige Oberfläche des kunstharzgetränkten Papiers wird ein Additiv aufgebracht. Im vorliegenden Ausführungsbeispiel werden 2,7 g/m² wässrige Digitaldruckfarbe aufgesprüht, z. B. durch einen Tintenstrahldrucker oder durch eine andere Sprühvorrichtung. Das Additiv haftet auf der klebrigen Kunstharzoberfläche.

Das so mit einem Additiv versehene, kunstharzgetränkte Papier wird nun weiter getrocknet bis auf einen Feuchtegehalt (VC-Wert) von 6%. Das Zwischentrocknen und das Trocknen erfolgen in bekannten Trocknungsvorrichtungen, z. B. in einem Kanaltrockner, in dem Heißluftdüsen das Papier von der Oberseite und der Unterseite anströmen und dadurch trocknen. Das getrocknete, kunstharzgetränkte und mit einem Additiv versehene Papier kann nun gelagert werden, bis es verwendet wird.

Das kunstharzgetränkte Papier (Overlay) für den Gegenzug kann auf die gleiche Art hergestellt werden wie vorstehend beschrieben. Es kann also ohne, aber auch mit einem Additiv hergestellt werden. Das Additiv oder die Kombination aus Additiven kann gleich oder unterschiedlich sein wie das kunstharzgetränkte Papier, das auf die Oberseite der Trägerplatte aufgelegt wird. Auch das kunstharzgetränkte Papier für den Gegenzug wird bis auf einen VC-Wert von 6% getrocknet. Der Gegenzug besteht beim Ausführungsbeispiel 1 aus dem kunstharzgetränkten Papier mit oder ohne Additiv und einem Furnier, in der Regel einem preiswerten Furnier, das die Außenlage auf der Unterseite der furnierten Platte bildet.

### Herstellen der furnierten Platte

Gegenzug, Trägerplatte, kunstharzgetränktes Papier mit Additiv und Furnier werden zu einem Pressgutstapel geschichtet.

Der Pressgutstapel wird in eine KT-Presse (Kurztaktpresse) verbracht und dort bei einer Temperatur von 180°C, einem Druck von p = 30 N/mm² während einer Presszeit von 30 Sekunden verpresst. Es kann mit einem einfachen, glatten Pressblech gepresst werden. Bei diesem Ausführungsbeispiel können aber auch strukturierte Pressbleche als Strukturgeber eingesetzt werden. Es kann beispielsweise ein Pressblech mit einer Holzstruktur verwendet werden. Nach der Verpressung konnte in den Poren des Furniers und in Furnierfehlstellen (Astlöcher usw.) ein schwarzer Farbdurchschlag beobachtet werden. Im Furnier war die Holzstruktur des Pressblechs erkennbar. Auf der Oberseite des Furniers hatte sich keine erkennbare Melaminharzschicht ausgebildet. Erkennbare Verfärbungen ergaben sich allein durch das Additiv, hier die schwarze Tinte. Die schwarze Tinte wurde also während des Pressvorgangs mittels des sich verflüssigenden Kunstharzes durch größere Öffnungen im Furnier bzw. zwischen den Fasern des Furniers hindurch an die Oberfläche des Furniers gefördert. Die Furnieroberfläche ist damit auf eine Weise akzentuiert bzw. gestaltet, die bisher nicht möglich war. Das erfindungsgemäße Verfahren bietet eine bessere Gestaltungs- und damit Gebrauchseigenschaft einer furnierten Platte.

Dieses Verfahren kann durch das Aufstreuen von Melaminharzpulver auf das noch nicht getrocknete Harz gesteuert werden. Zur Verdeutlichung des Prinzips wurde auf das mit Kunstharz getränkte, aber noch nicht getrocknete Overlay eine definierte Menge Melaminharzpulver aufgebracht, dann getrocknet und danach unterschiedliche Mengen der vorstehend beschriebenen, verdünnten Digitaldruckfarbe aufgebracht. Zum Vergleich wurde jeweils ein Overlay ohne aufgestreutes Melaminharzpulver mitproduziert. Die Overlays wurden dann unter den gleichen Bedingungen und dem gleichen Aufbau, wie im Ausführungsbeispiel 1 beschrieben, verpresst. Wie aus der Tabelle zu entnehmen ist, kann mit dieser Vorgehensweise die Verteilung/Penetration des Additivs gesteuert werden.

Nach einer Alternative kann im Rahmen des Ausführungsbeispiels 1 ein Teil des Kunstharzes in fester Form, insbesondere als Pulver eingesetzt werden. Eine typische Abfolge des Auftragens von Kunstharz kann z. B. sein, dass das Papier zunächst mit flüssigem Kunstharz getränkt wird, anschließend wird Kunstharz als Pulver aufgetragen. Das Verfahren wird nach dem vollständigen Aufbringen des Kunstharzes fortgesetzt wie vorstehend beschrieben.

| **Nr.** | **Melamin-pulverauf-trag in g/m²** | **Farbauf-trag verdünnt fl./m²** | **Verdünnung Farbe: Wasser** | **Farbauftrag unverdünnt in g/m²** | **Beurteilung** |
|---|---|---|---|---|---|
| 1 | o | 40 | 1:15 | 2,7 | leichter Farbdurchschlag in Pore |
| 2 | 36 | 39 | 1:15 | 2,6 | stärkerer Farbdurchschlag in Pore |
| 3 | o | 49 | 1:5 | 9,8 | starker Farbdurchschlag in Pore |
| 4 | 36 | 51 | 1:5 | 10,2 | sehr starker Farbdurch-schlag in Pore |
| 5 | o | 77 | 1:5 | 15,4 | sehr starker Farbdurchschlag in Pore |
| 6 | 36 | 75 | 1:5 | 15 | sehr starker Farbdurchschlag in Pore, leichter Farbdurchschlag in Fläche |

### Ausführungsbeispiel 2 - Leitfähigkeitserhöhung

**Ausgangsmaterialien:**

| | | |
|---|---|---|
| Furnier für die Oberseite: | Stärke: | 0,8 mm |
| | Art: | Eiche |
| Kunstharzgetränktes Overlay: | Papiergewicht: | 25 |
| g/m² | | |
| | Harzauftrag: | 600% |
| | Kunstharz: | Melaminharz |
| Additiv: | Aquacyl AQ 0302 (3%-ig) | 30 g/m² |
| | im Sprühauftrag aufgetragen (^{∗}1) | |
| Trägerplatte: | hochdichte Faserplatte: | HDF |
| | Stärke: | 12 mm |
| Gegenzug (Overlay): | Papiergewicht: | 25 g/m² |
| | Harzauftrag: | 600% |
| | (Oberseite zum Gegenzugfurnier gedreht) | |
| Furnier für den Gegenzug: | Stärke: | 0,8 mm |
| | Art: | Birke |

| | | |
|---|---|---|
| (*1) Bei dem Produkt Aquacyl AQ 0302 handelt es sich um eine wässrige Dispersion von Multi Wall Kohlenstoff Nanotubes. | | |

Das Herstellen des kunstharzgetränkten Papiers erfolgt wie vorstehend zum Ausführungsbeispiel 1 beschrieben. Als Additiv wird jedoch eine wässrige, 3 %-ige Dispersion von Multi-Wall Kohlenstoff-Nanotubes aufgesprüht, beispielsweise mittels einer Düsenanordnung, die sich über die Breite der Trägerplatte erstreckt.

Auch der Gegenzug wird wie beim Ausführungsbeispiel 1 beschrieben hergestellt. Auf den Gegenzug werden die Trägerplatte, das kunstharzgetränkte Papier und das Eichenfurnier zu einem Pressgutstapel geschichtet. Dieser Pressgutstapel wird in einer KT-Presse bei einer Temperatur von 180°C, einem Druck von p = 30 N/mm² während einer Presszeit von 30 Sekunden verpresst.

Zum Vergleich wurde bei sonst gleichem Aufbau und gleicher Herstellung eine Platte ohne das Additiv Aquacyl AQ0302 auf dem kunstharzgetränkten Papier hergestellt.

Als Strukturgeber wurde auch bei diesem Ausführungsbeispiel ein Pressblech mit einer aufgeprägten Holzstruktur verwendet. Im Furnier war die Holzstruktur des Pressblechs als Negativ erkennbar. Auf der Oberseite des Furniers war keine Melaminharzschicht erkennbar, die sich durch eine dunkle Verfärbung des Furniers bemerkbar gemacht hätte. Nach dem Abkühlen der furnierten Platte wurde bei beiden Mustern, mit und ohne Additiv, der Oberflächenwiderstand nach der DIN EN 1081:2018 nach einer Klimatisierung (48 h, 23 °C, 50% relative Luftfeuchte) bestimmt. Bei der Probe ohne Aquacyl AQ 0302 wurde ein Wert von 3 × 10¹¹ Ω bestimmt. Bei der Probe mit dem Additiv wurden 5 × 10⁸ Ω gemessen.

Bei der Probe mit dem Additiv wurde zusätzlich in einer weiteren Probe mit einem Bandschleifer ca. 0,2 mm der Furnieroberfläche abgeschliffen. Die erneute Messung des Oberflächenwiderstands ergab 5,5 × 10⁸ Ω. Der Oberflächenwiderstand lässt sich also durch die Verwendung von Aquacyl AQ 0302 mit Kohlenstoff-Nanotubes gegenüber der Nullprobe um ca. drei Zehnerpotenzen reduzieren. Die Leitfähigkeit der furnierten Oberseite der furnierten Platte ist damit wesentlich verbessert, und dies bei sparsamem Einsatz des Additivs, das durch das Auftragen auf die klebrige Oberfläche des Kunstharzes durch das Kunstharz während des Verpressens gezielt durch das Furnier hindurch an die Oberfläche des Furniers gefördert wird.

### Ausführungsbeispiel 3 - Verbesserung der Lichtechtheit

**Ausgangsmaterialien:**

| | | |
|---|---|---|
| Furnier für die Oberseite: | Stärke: | 0,8 mm |
| | Art: | Eiche |
| Kunstharzgetränktes Papier: | Papiergewicht: | 25g/m² |
| | Harzauftrag: | 600% |
| | Kunstharz: | Melaminharz |
| Additive: | Lignostab 1198 (10%ige Lösung) | 1 g/m² |
| | Tinuvin 292 (10%ige Lösung) | 1 g/m² |
| | nacheinander jeweils im Sprühauftrag aufgetragen | |
| Trägerplatte: | hochdichte Faserplatte: | HDF |
| | Stärke: | 12 mm |
| Gegenzug: | Papiergewicht: | 25 g/m² |
| Harzauftrag: | 600% | |
| (Oberseite zum Gegenzugfurnier gedreht) | | |
| Furnier: | Birke | |
| Stärke: | 0,8 mm | |

Das Herstellen des kunstharzgetränkten Papiers (Overlay) sowie des Gegenzugs (wie Overlay) erfolgen in gleicher Weise wie beim Ausführungsbeispiel 1 beschrieben. Auf das kunstharzgetränkte, vorgetrocknete und daher klebrige Papier werden nacheinander zwei Additive aufgetragen, eine 10 %-ige Lösung Lignostab und eine 10 %-ige Lösung Tinuvin, jeweils in einer Menge von 1 g/m².

Der Pressgutstapel, der, abgesehen von den Additiven, gleich aufgebaut ist wie bei den vorstehenden Ausführungsbeispielen, wird in einer KT-Presse bei einer Temperatur von 180°C, einem Druck von p = 30 N/mm² und bei einer Presszeit von 30 Sekunden verpresst.

Zum Vergleich wurde eine ansonsten gleiche furnierte Platte ohne Additive (Lignostab 1198 und Tinuvin 292) auf dem Overlay hergestellt.

Als Strukturgeber wurde ein Pressblech mit einer Holzstruktur verwendet. Im Furnier der furnierten Platte war die Holzstruktur des Pressblechs erkennbar. Auf der Oberseite des Furniers war keine Melaminharzschicht erkennbar, die sich durch eine dunkle Verfärbung des Furniers bemerkbar gemacht hätte.

Anschließend wurde eine Prüfung der Lichtechtheit nach der DIN EN ISO 4892-2, 2013-06 (600 h) durchgeführt. Die Vergleichsplatte (Nullprobe) ohne die beiden Additive wurde mitgeprüft. Bei der erfindungsgemäßen furnierten Platte mit den Additiven ergab sich ein ΔE von < 1,5, bei der Probe ohne Wirkstoff ergab sich ein ΔE von 4. Die erfindungsgemäße furnierte Platte ist also deutlich stabiler als eine Vergleichsplatte ohne Additive. Auch hier zeigt sich, dass die Additive während des Verpressens auf der Oberfläche des verflüssigten Kunstharzes aufliegen und in das bzw. durch das Furnier gefördert werden.

Die drei aufgeführten Ausführungsbeispiele zeigen lediglich einen kleinen Ausschnitt der Möglichkeiten, die dieses Verfahren bietet. Zur Verbesserung der Eigenschaften der eingesetzten Furniere muss keine intensive Oberflächenbehandlung oder gar eine "Tauchimprägnierung" erfolgen. Das in das Furnier eindringende Melaminharz fungiert als Unterlage bzw. Transportmedium für die Wirkstoffe. Gleichzeitig wird auch eine Verteilung des Wirkstoffs im Furnierquerschnitt erreicht.

**Ausführungsbeispiel 4 - Furnier beidseitig der Trägerplatte**

| | | |
|---|---|---|
| Furnier für die Unter- und Oberseite: | Stärke: | 0,8 |
| mm | | |
| | Art: | Eiche |
| Kunstharzgetränktes Papier (Overlay): | Papiergewicht: | 25 |
| g/m² | | |
| | Harzauftrag: | 600% |
| | Kunstharz: | Melaminharz |
| Trägerplatte: | hochdichte Faserplatte: | HDF |
| | Stärke: | 6 mm |

Es wird jeweils ein Furnier aus Eiche auf die Oberseite der Trägerplatte und ein Furnier aus Eiche auf die Unterseite der Trägerplatte aufgebracht. Zu diesem Zweck werden zwei Papiere mit Kunstharz versehen, so wie für das Ausführungsbeispiel 1 beschrieben. Auf das Kunstharz, das nachfolgend in das Furnier eindringt, wird ein Additiv aufgegeben. Dabei kann ein Farbstoff, Pigment, Effektpigment, z. B. Metall-Pigmente oder reflektierende Pigmente, Flammschutzmittel wie z. B. Borverbindungen oder Wasserglas, Tinte, ein UV-Stabilisator, ein Infrarotabsorber, Mittel zur Erhöhung der Leitfähigkeit, antibakterielle Mittel, Hydrophobierungsmittel, Bleichmittel oder Beize als Additiv eingesetzt werden. Das Additiv kann als Feststoff, vorzugsweise als partikelförmiger Feststoff, z. B. als Staub oder Pulver, aber auch als Granulat vorliegen. Alternativ kann ein flüssiges oder pastöses Additiv eingesetzt werden, das bevorzugt nicht im Kunstharz löslich bzw. homogen im Kunstharz einmischbar ist. Allerdings kann das Additiv auch im Bindemittel löslich sein; dann wird das Additiv ggf. nicht vollständig mit an die Oberfläche transportiert. Dies ist eine Frage der Dosierung des Additivs. Die einzusetzende Menge hängt vom gewünschten technischen oder ästhetischen Effekt ab und lässt sich in wenigen Versuchen ermitteln.

Die Trägerplatte ist hier eine im Vergleich zu den vorstehenden Ausführungsbeispielen dünne HDF-Platte mit einer Dicke von 6 mm. Dünne Trägerplatten sind insbesondere geeignet für die Ausstattung von Fahrzeugen, z. B. für den Innenausbau von Führerhäusern, Campingwagen, Wohnmobilen, Flugzeugen oder Schiffen, insbesondere Kreuzfahrtschiffen.

Als Alternative können grundsätzlich auch andere dünne Platten ausreichender Festigkeit eingesetzt werden, z. B. wasserfeste Platten mit minimalem Quell- und Schwindmaß, die auch zum Einsatz in Feuchträumen wie Schwimmbädern oder Saunen, aber auch Bädern und Küchen geeignet sind, insbesondere wasserfeste MDF-Platten oder Faserplatten mit hohem Bindemittelanteil.

Weiterhin können die Platten mit den Furnieroberflächen natürlich auch zur Herstellung von Wand- oder Deckenverkleidungen eingesetzt werden. Auch der Einsatz für die Herstellung von Möbeln ist möglich.

Zudem können mit dieser Technologie auch spezielle Anwendungen abgedeckt werden bei denen Produkteigenschaften gefordert sind, die bisher mit Holzoberflächen nicht herstellbar waren. Diese können z. B. die Feuchtebeständigkeit, die Reinigbarkeit/Desinfizierbarkeit, die Kratzfestigkeit usw. sein. Durch das Verfahren erhält man eine Furnier-/Holzoberfläche, die die Eigenschaften einer Melaminharzoberfläche besitzt. Diese Oberfläche ist für ihre gute Beständigkeit gegenüber mechanischen, chemischen und thermischen Beanspruchungen bekannt. Durch die Steuerung des Flusses des Melaminharzes gelingt es also, die Eigenschaften einer Melaminharzoberfläche zu erzeugen, ohne dass diese tatsächlich sichtbar ist. Wenn nämlich das Melaminharz bis an die Oberfläche aufsteigt, verändert sich das Erscheinungsbild des Furniers von holzartig, also natürlich, zu kunststoffartig. Dieser Effekt ist unerwünscht und wird hier erfindungsgemäß vermieden. Einige Beispiele für mögliche Anwendungen sind Trennwände in Sanitär-/Umkleidebereichen, Fahrzeugbereich, Zahltheken, Außenmöblierung usw. Diese Liste ist selbstverständlich nicht vollständig, sondern zeigt nur einige mögliche Anwendungen.

## Patentansprüche

1. Verfahren zum Herstellen einer furnierten Platte (1), aufweisend ein Furnier (8) und eine Trägerplatte (2), mit den Schritten:
- Bereitstellen eines Furniers (8) und einer Trägerplatte (2)
- Bereitstellen eines mit Bindemittel getränkten Papiers (4), das in einem Pressgutstapel zwischen einer Oberseite (3) der Trägerplatte (2) und einer Unterseite des Furniers (8) angeordnet wird, sowie
- Verpressen des Pressgutstapels,
**dadurch gekennzeichnet, dass**
- das Papier (4) mit einem Bindemittel getränkt wird,
- das mit Bindemittel getränkte Papier (4) vorgetrocknet wird, so dass es noch klebrig ist,
- mindestens ein Additiv (7) auf das vorgetrocknete, noch klebrige Bindemittel aufgetragen wird, und
- das mit Bindemittel getränkte und mit einem Additiv (7) versehene Papier (4) auf eine Restfeuchte von bis zu 8 % Feuchtegehalt getrocknet wird.

2. Verfahren nach Anspruch 1, **dadurch gekennzeichnet, dass** als Additiv (7) eine der nachstehenden Substanzen oder eine Mischung von zwei oder mehr der nachstehend genannten Substanzen eingesetzt wird: Farbstoff, Pigment, Effektpigment, Flammschutzmittel, Tinte, UV-Stabilisator, Infrarotabsorber, Mittel zur Erhöhung der Leitfähigkeit, antibakterielle Mittel, Hydrophobierungsmittel, Bleichmittel, Beize.

3. Verfahren nach Anspruch 1 oder 2, **dadurch gekennzeichnet, dass** das Additiv (7) als partikelförmiger Feststoff oder in flüssiger Form aufgetragen wird.

4. Verfahren nach einem der vorstehenden Ansprüche, **dadurch gekennzeichnet, dass** das Additiv (7) nicht in dem Bindemittel lösbar oder nicht homogen in dem Bindemittel lösbar ist.

5. Verfahren nach einem der vorstehenden Ansprüche, **dadurch gekennzeichnet, dass** nach dem Tränken des Papiers (4) mit Bindemittel überschüssiges Bindemittel auf einer der Trägerseite zugewandten Unterseite (5) des Papiers (4) entfernt wird.

6. Verfahren nach einem der vorstehenden Ansprüche, **dadurch gekennzeichnet, dass** das Bindemittel in einer ersten Teilmenge in flüssiger Form und in einer zweiten Teilmenge in fester Form eingesetzt wird.

7. Furnierte Platte (1), aufweisend eine Trägerplatte (2) und ein oberhalb der Trägerplatte (2) angeordnetes Furnier (8), wobei zwischen einer Oberseite (3) der Trägerplatte (2) und einer Unterseite des Furniers (8) ein mit Bindemittel getränktes Papier (4) angeordnet ist, **dadurch gekennzeichnet, dass** das Furnier (8) mindestens abschnittsweise mit Bindemittel getränkt ist, und dass sich auf der Oberseite des Bindemittels im Furnier (8) ein Additiv (7) befindet.

8. Furnierte Platte (1) nach Anspruch 7, **dadurch gekennzeichnet, dass** sich auf einer Unterseite (9) der Trägerplatte (2) ein Gegenzug (10) befindet.

9. Furnierte Platte (1) nach einem der Ansprüche 7 oder 8, **dadurch gekennzeichnet, dass** ein Furnier (8) als Gegenzug (10) eingesetzt wird.

10. Furnierte Platte (1) nach einem der Ansprüche 7 bis 9, **dadurch gekennzeichnet, dass** die Trägerplatte (2) eine Holzwerkstoffplatte ist.

11. Furnierte Platte (1) nach einem der Ansprüche 7 bis 10, **dadurch gekennzeichnet, dass** die Trägerplatte eine wasserfeste Platte ist, die auf einer oder auf beiden Seiten mit einem Furnier versehen ist.

## Claims

1. A method for producing a veneered board (1), comprising a veneer (8) and a carrier board (2), said method comprising the steps of:
- providing a veneer (8) and a backing board (2),
- providing a sheet of paper (4) that is impregnated with binder and that is arranged in a stack of items to be pressed between an upper face (3) of the backing board (2) and a lower face of the veneer (8), and
- pressing the stack of items to be pressed,
**characterized in that**
- the paper (4) is impregnated with a binder,
- the paper (4) impregnated with binder is pre-dried such that it is still sticky,
- at least one additive (7) is applied to the pre-dried binder that is still sticky, and
- the paper (4) impregnated with binder and provided with an additive (7) is dried to a residual moisture content of up to 8%.

2. The method according to claim 1, **characterized in that** one of the following substances or a mixture of two or more of the following substances is used as the additive (7): dye, pigment, effect pigment, flame retardant, ink, UV stabilizer, infrared absorber, agent for increasing the conductivity, antibacterial agent, hydrophobing agent, bleaching agent, wood stain.

3. The method according to claim 1 or 2, **characterized in that** the additive (7) is applied as a particulate solid or in liquid form.

4. The method according to any one of the preceding claims, **characterized in that** the additive (7) is not soluble in the binder or is not homogeneously soluble in the binder.

5. The method according to any one of the preceding claims, **characterized in that**, after the paper (4) is impregnated with binder, excess binder is removed on a lower face (5) of the paper (4) facing the upper face of the carrier board.

6. The method according to any one of the preceding claims, **characterized in that** the binder is used in a first partial amount in liquid form and in a second partial amount in solid form.

7. A veneered board (1), comprising a backing board (2) and a veneer (8) arranged above the backing board (2), wherein a sheet of paper (4) impregnated with binder is arranged between an upper face (3) of the backing board (2) and a lower face of the veneer (8), **characterized in that** the veneer (8) is impregnated at least in sections with binder, and **in that** an additive (7) is located on the upper face of the binder in the veneer (8).

8. The veneered board (1) according to claim 7, **characterized in that** a counteracting material (10) is located on a lower face (9) of the backing board (2).

9. The veneered board (1) according to any one of claims 7 or 8, **characterized in that** a veneer (8) is used as the counteracting material (10).

10. The veneered board (1) according to any one of claims 7 to 9, **characterized in that** the backing board (2) is a composite wood board.

11. The veneered board (1) according to any one of claims 7 to 10, **characterized in that** the backing board is a water-resistant board that is provided with a veneer on one or both faces.

## Revendications

1. Procédé de fabrication d'une plaque contreplaquée (1), présentant un placage (8) et une plaque de support (2), comprenant les étapes suivantes :
- mise à disposition d'un placage (8) et d'une plaque de support (2),
- mise à disposition d'un papier (4) imprégné de liant, lequel est disposé dans une pile de matière à presser entre une face supérieure (3) de la plaque de support (2) et une face inférieure du placage (8), et
- pressage de la pile de matière à presser,
**caractérisé en ce que**
- la papier (4) est imprégné de liant,
- le papier (4) imprégné de liant est préséché, de manière à rester collant,
- au moins un adjuvant (7) est appliqué sur le liant préséché encore collant, et
- le papier (4) imprégné de liant et pourvu d'un adjuvant (7) est séché à une humidité résiduelle allant jusqu'à 8% de taux d'humidité.

2. Procédé selon la revendication 1, **caractérisé en ce que** l'adjuvant (7) utilisé est l'une des substances ci-après ou un mélange de deux ou plusieurs des substances mentionnées ci-après : colorant, pigment, pigment à effet, retardateur de flamme, encre, stabilisateur UV, absorbeur d'infrarouge, agent destiné à augmenter la conductivité, agent anti-bactérien, agent hydrofugeant, agent blanchissant, teinture.

3. Procédé selon la revendication 1 ou 2, **caractérisé en ce que** l'adjuvant (7) est appliqué sous la forme d'une matière solide en particules ou sous forme liquide.

4. Procédé selon l'une des revendications précédentes, **caractérisé en ce que** l'adjuvant (7) n'est pas soluble dans le liant ou n'est pas soluble de façon homogène dans le liant.

5. Procédé selon l'une des revendications précédentes, **caractérisé en ce que** suite à l'imprégnation du papier (4) avec le liant, du liant excédentaire sur une face inférieure (5) du papier (4) tournée vers la face de support est éliminé.

6. Procédé selon l'une des revendications précédentes, **caractérisé en ce que** le liant est utilisé sous forme liquide dans une première quantité partielle et sous forme solide dans une deuxième quantité partielle.

7. Plaque contreplaquée (1), présentant une plaque de support (2) et un placage (8) disposé sur la plaque de support (2), dans laquelle un papier (4) imprégné de liant est disposé entre une face supérieure (3) de la plaque de support (2) et une face inférieure du placage (8), **caractérisée en ce que** le placage (8) est au moins en partie imprégné de liant, et **en ce qu'**un adjuvant (7) se trouve sur la face supérieure du liant dans le placage (8).

8. Plaque contreplaquée (1) selon la revendication 7, **caractérisée en ce qu'**un contreparement (10) se trouve sur une face inférieure (9) de la plaque de support (2).

9. Plaque contreplaquée (1) selon l'une des revendications 7 ou 8, **caractérisée en ce qu'**un placage (8) est utilisé comme contreparement (10).

10. Plaque contreplaquée (1) selon l'une des revendications 7 à 9, **caractérisée en ce que** la plaque de support (2) est une plaque de matériau dérivé du bois.

11. Plaque contreplaquée (1) selon l'une des revendications 7 à 10, **caractérisée en ce que** la plaque de support est une plaque résistante à l'eau, laquelle est pourvue d'un placage sur une face ou les deux.
